# DEMANDE DE BREVET EUROPEEN

(11) **EP 4 169 970 A1**
(43) Date de publication de la demande: **26.04.2023**
(21) Numéro de dépôt: 22202903.5
(22) Date de dépôt: 21.10.2022
(51) Int. Cl.: C08G 73/10, C09D 179/08

(54) **PROCÉDÉ DE PRÉPARATION D'UN MATÉRIAU (CO)POLYIMIDE ÉLECTRO-ACTIF**

(30) Priorité: 22.10.2021 FR 2111259
(71) Demandeur: Commissariat à l'énergie atomique et aux énergies alternatives, 75015 Paris (FR)
(72) Inventeur: GOUGET, Valentin, 38054 GRENOBLE Cedex 09 (FR)
(74) Mandataire: Cabinet Nony

(57) **Abrégé**

La présente invention vise à titre principal un procédé de préparation d'un matériau (co)polyimide électro-actif par polycondensation d'au moins au moins un composé aromatique polycondensé choisi parmi les acides tétracarboxyliques aromatiques polycondensés et les di-anhydrides d'acide aromatique polycondensé et d'au moins une diamine aliphatique secondaire, en un milieu solvant aqueux et en particulier en de l'eau.

## Description

### Domaine technique

La présente invention a trait au domaine du stockage électrochimique de l'énergie, et en particulier à celui des batteries à matériaux d'électrodes organiques. Elle vise plus particulièrement la préparation de matériaux de type (co)polyimide, notamment utiles comme matériaux actifs d'électrodes organiques dans des systèmes électrochimiques, en particulier dans des batteries au lithium.

### Technique antérieure

Les batteries au lithium sont de plus en plus utilisées comme sources d'énergie autonome, notamment dans l'électronique portable. Ces batteries au lithium trouvent en effet de multiples applications, en particulier dans les nouvelles technologies de l'information et de la communication (NTIC), des dispositifs médicaux, les véhicules électriques, le stockage de l'énergie de cellules photovoltaïques, etc.

Pour répondre à des contraintes de coût, de volume de production, d'amélioration de performances en puissance mais aussi de respect à l'égard de l'environnement, des nouveaux matériaux actifs d'électrodes et des procédés de préparation de matériaux actifs d'électrode sont en permanence recherchés.

A ce titre, les matériaux d'électrodes organiques se sont révélés particulièrement intéressants pour les systèmes de stockage d'énergie modernes en raison de leur durabilité des ressources et de leur respect de l'environnement.

Parmi ces matériaux d'électrodes organiques, les matériaux d'électrodes polymériques comme les (co)polyimides s'avèrent particulièrement avantageux au regard de leur meilleure stabilité au cyclage utilisé pour les batteries lithium-ion, comparativement aux petites molécules organiques. Malheureusement, le procédé de synthèse, conventionnellement considéré pour élaborer ces matériaux de type (co)polyimide n'est pas conforme au principe du respect des préoccupations de l'environnement. En effet, il requiert de réaliser l'ensemble de ces étapes, à savoir la polycondensation d'un dianhydride aromatique avec une diamine pour former un intermédiaire appelé polyacide amique, et la transformation ultérieure de celui-ci en (co)polyimide par élévation de la température ou par une déshydratation chimique, dans un solvant aprotique polaire, comme le diméthylacétamide, le diméthylformamide, les crésols ou encore dans la N-méthylpyrrolidone. Or aucun de ces solvants n'est inoffensif à l'égard de l'environnement.

### Exposé de l'invention

La présente invention a donc précisément pour objet de proposer une nouvelle méthode de préparation d'un matériau (co)polyimide permettant de s'affranchir de cette non-conformité. Plus particulièrement, l'invention concerne, selon un premier de ses aspects, un procédé de préparation d'un matériau (co)polyimide électro-actif, comprenant au moins les étapes consistant à :
(i) disposer d'une formulation contenant en milieu solvant au moins une diamine aliphatique secondaire et au moins un composé aromatique polycondensé choisi parmi les acides tétracarboxyliques aromatiques polycondensés et les di-anhydrides d'acide aromatique polycondensé,
(ii) exposer ladite formulation (i) à des conditions propices à la polycondensation desdits composé(s) aromatique(s) polycondensé(s) et diamine(s) pour former ledit (co)polyimide et
(ii) éliminer ledit milieu solvant,
caractérisé en ce que ledit milieu solvant consiste en un milieu solvant aqueux et en particulier en de l'eau.

Selon une variante particulière de l'invention le composé aromatique polycondensé est un di-anhydride d'acide aromatique polycondensé.

L'invention concerne encore un matériau (co)polyimide obtenu par le procédé selon l'invention tel que défini précédemment.

Le procédé de préparation d'un matériau (co)polyimide selon l'invention s'avère avantageux à plusieurs titres. Tout d'abord, la synthèse a lieu en milieu aqueux et non dans un milieu organique plus toxique. Par ailleurs, la réaction de transformation est totale et il n'est donc avantageusement pas constaté de traces du précurseur anhydride qui seraient susceptibles d'abaisser les performances électrochimiques en batterie du matériau (co)polyimide ainsi synthétisé.

Les inventeurs ont donc constaté qu'il est possible d'accéder *via* un tel procédé, à un matériau (co)polyimide particulièrement avantageux à titre de matériau actif d'électrodes organiques, en particulier pour des batteries secondaires au lithium.

Ainsi, l'invention concerne également selon un autre de ses aspects, l'utilisation d'un matériau (co)polyimide obtenu par le procédé de l'invention, à titre de matériau actif d'électrode.

Elle concerne encore une électrode comprenant, à titre de matériau actif, au moins un matériau (co)polyimide obtenu par le procédé de l'invention.

Elle concerne également un procédé de préparation d'une telle électrode comprenant au moins les étapes suivantes consistant à :
(a) disposer d'une dispersion comprenant, dans un milieu aqueux ou organique, au moins un matériau (co)polyimide obtenu selon l'invention, et éventuellement un ou plusieurs additif(s) conducteur(s) électronique(s) et/ou liant(s) ;
(b) procéder au dépôt de tout ou partie de ladite dispersion (a) à la surface d'un collecteur de courant, par exemple, de type feuillard en aluminium ; et
(c) évaporer ledit milieu aqueux ou organique pour former ladite électrode.

Comme illustré dans les exemples qui suivent, une électrode organique mettant en œuvre un matériau (co)polyimide selon l'invention permet d'accéder à un système électrochimique, tel qu'une batterie au lithium, présentant avantageusement d'excellentes performances électrochimiques, en particulier en termes de stabilité en cyclage.

L'invention concerne encore, selon un autre de ses aspects, un système électrochimique comprenant au moins une électrode selon l'invention. Un tel système électrochimique est plus particulièrement une batterie organique, en particulier une batterie en configuration cation-ion, notamment une batterie lithium-ion, sodium-ion, potassium-ion, magnésium-ion.

D'autres caractéristiques, variantes et avantages des objets de l'invention, ressortiront mieux à la lecture de la description, des exemples et figures qui vont suivre, donnés à titre illustratif et non limitatif de l'invention.

Dans la suite du texte, les expressions « compris entre ... et ... », « allant de ... à ... » et « variant de ... à ... » sont équivalentes et entendent signifier que les bornes sont incluses, sauf mention contraire.

### Brève description des dessins

[Fig 1] représente les deux spectres d'analyse IR à transformation de Fournier, IR-ATF, de polyimides conforme et non conforme à l'invention préparés en exemple 1.
[Fig 2] représente l'évolution de la capacité spécifique (en mAh/g) en fonction du nombre de cycles, à des régimes croissants (5 cycles à C/10, C/5, C/2, C, C, 2C, 5C, et 50 cycles à C), pour une batterie mettant en œuvre une électrode formée d'un polyimide obtenu selon l'invention ou une électrode formée d'un polyimide obtenu par un procédé non conforme.

### Description détaillée

Par définition, les polyimides sont des produits de polycondensation d'au moins un composé aromatique polycondensé choisi parmi les acides tétracarboxyliques polyaromatiques condensés et les di-anhydrides d'acide polyaromatique condensé et d'au moins une diamine aliphatique secondaire.

Un copolymère est un polymère issu de la copolymérisation d'au moins deux types de monomères, chimiquement différents, appelés co-monomères.

Dans le cadre de la présente invention, les (co)polyimides formés peuvent être des homopolymères ou des co-polymères, copolyimides, et de préférence sont des homopolymères.

Comme précisé ci-dessus, une synthèse en deux étapes est plus couramment utilisée pour la synthèse des polyimides. La première étape est la formation d'acide poly(amique) à partir d'au moins un composé aromatique polycondensé conforme à l'invention et d'au moins une diamine aliphatique secondaire et la deuxième étape est l'imidisation ou la déshydratation, de ce poly(acide amique).

Comme précisé ci-dessus, le composé aromatique polycondensé considéré selon l'invention est choisi parmi les acides tétracarboxyliques aromatiques polycondensés et les di-anhydrides d'acide aromatique polycondensé.

Au sens de l'invention, le terme « aromatique polycondensé » désigne une structure chimique comprenant plusieurs cycles aromatiques condensés avec certains des atomes de carbone étant communs à deux ou trois cycles. Une structure de ce type est également appelée hydrocarbure à noyaux condensés ou hydrocarbures aromatiques polycycliques (HAP). Les cycles peuvent être alignés ou présenter une disposition angulaire ou compacte.

Les structures aromatiques polycondensées convenant à l'invention sont de préférence en C10 à C30 et en particulier peuvent posséder au moins deux, trois, quatre ou cinq cycles condensés. Ces cycles peuvent être substitués ou non notamment par un ou plusieurs radicaux alkyles en C1 à C6, linéaires ou ramifiés. Ils peuvent contenir un ou plusieurs hétéroatomes notamment choisis parmi les atomes d'oxygène et d'azote.

Selon une première variante de l'invention, les composés aromatiques polycondensés considérés selon l'invention sont choisis parmi les di-anhydres d'acide aromatique polycondensé.

A titre illustratif des di-anhydrides d'acide aromatique polycondensé convenant à l'invention peuvent notamment être cités les di-anhydrides d'acide tétracarboxylique dont la structure aromatique polycyclique dérive de l'anthracène, du benzoanthracène, du benzofluoranthène, du 1,12-benzopérylène, du benzopyrène, du chrysène, du dibenzoacridine, du dibenzoanthracène, du dibenzofurane, du dibenzopyrène, du pérylène ou du phénanthrène.

Plus particulièrement, le di-anhydride d'acide aromatique polycondensé est choisi parmi le di-anhydride de l'acide 1,2,5,6-naphthalènetétracarboxylique, le di-anhydride de l'acide 2,3,6,7-naphthalènetétracarboxylique, le di-anhydride de l'acide 3,4,9,10-pérylènetétracarboxylique et leurs mélanges.

Selon une autre variante de l'invention, le composé aromatique polycondensé est au moins un acide tétracarboxylique aromatique polycondensé.

Par acide tétracarboxylique, on entend un composé comprenant quatre fonctions acide carboxylique. A titre illustratif des acides tétracarboxyliques aromatiques polycondensés convenant à l'invention peuvent notamment être cités les acides tétracarboxyliques dont la structure aromatique polycondensée dérive de l'anthracène, du benzoanthracène, du benzofluoranthène, du 1,12-benzopérylène, du benzopyrène, du chrysène, du dibenzoacridine, du dibenzoanthracène, du dibenzofurane, du dibenzopyrène, du pérylène et du phénanthrène, de préférence non hydroxylés. Plus particulièrement, l'acide tétracarboxylique aromatique polycondensé peut être choisi parmi l'acide 1,2,5,6-naphthalènetétracarboxylique, l'acide 2,3,6,7-naphthalènetétracarboxylique, l'acide 3,4,9,10-pérylènetétracarboxylique et leurs mélanges.

Selon une variante préférée de l'invention, le composé aromatique polycondensé considéré selon l'invention est au moins un di-anhydre d'acide aromatique polycondensé et plus particulièrement est le di-anhydride de l'acide 3,4,9,10-pérylènetétracarboxylique de formule

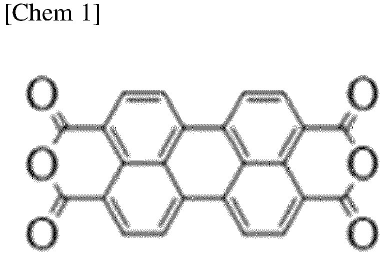

### Diamine aliphatique secondaire

Par « diamine aliphatique », on entend désigner une diamine dont les fonctions amines ne sont pas liées de manière covalente à un atome de carbone d'un cycle aromatique comme un phényle par exemple.

En particulier, les diamines convenant à l'invention sont de formule (I)
[Chem 2]

NH₂-(R)ₙ-NH₂ (I)

avec n étant égal à zéro ou 1, de préférence à 1 et
R étant un radical divalent hydrocarboné aliphatique, linéaire ou ramifié, en C1 à C20.

Plus précisément, R est un radical divalent hydrocarboné, linéaire ou ramifié, en C1 à C20 qui peut être saturé ou insaturé et de préférence est saturé. La chaîne hydrocarbonée divalente formant R peut être interrompue par un ou plusieurs hétéroatomes, en particulier par un ou plusieurs atomes d'oxygène et/ou un ou plusieurs noyaux aromatiques en C5 à C15. R peut être acyclique, cyclique ou alicyclique.

Selon une variante préférée, la diamine de formule (I) est une diamine aliphatique dénuée de motif aromatique.

Les diamines aliphatiques convenant à l'invention peuvent être choisies parmi les diamines aliphatiques acycliques comme par exemple les 1,2-diaminoéthane, 1,3-diaminopropane, 1,4-diaminobutane, 1,5-diaminopentane, l'hexaméthylène diamine, 2,2,4- et 2,4,4-triméthyl-hexaméthylène diamine, 1,7-diaminoheptane, 1,8-diaminooctane, 2-méthyl-1,8-diaminooctane, 2,2,7,7-tétraméthyl-octaméthylène diamine, 1,9-diaminonane, 5-méthyl-1,9-diaminononane, 1,10-diaminodécane, 1,1,1-diaminoundécane, 1,12-diaminododécane, 1,13-diaminothdécane, 1,14-diaminotétradécane et 2,2'-(éthylènedioxy)bis(éthyleneamine), les diamines aliphatiques cycliques comme par exemple les 1,2-bis(aminomethyl)cyclohexane, 1,3-bis(aminomethyl)cyclohexane, 1,4-bis(aminomethyl)cyclohexane, 1,2-cyclohexanediamine, 1,3-cyclohexanediamine, 1,4-cyclohexanediamine, 4,4'-diaminodicyclohexylmethane, 4,4'-methylenebis(2-methylcyclohexylamine), isophoronediamine, norbornanediamine, bis(aminomethyl)tricyclo[5.2.1.0(2,6)]decane, 3,3'-dimethyl-4,4'-diaminodicyclohexylmethane, et 4,4'-diaminodicyclohexylpropane et leurs mélanges. Selon une variante particulière, la diamine aliphatique est acyclique et notamment est l'hexaméthylènediamine.

Bien entendu, il est possible de considérer lors de la polycondensation selon l'invention plusieurs types de diamines aliphatiques de formule (I) et/ou de composés aromatiques polycondensés. De même, une polycondensation selon l'invention peut être réalisée en présence d'une diamine aliphatique de formule (I) en association avec une diamine aromatique complémentaire. Au sens de l'invention, une diamine aromatique est une diamine dont au moins un de ses deux atomes d'azote est lié à un motif aromatique.

La polycondensation des deux composantes, diamine aliphatique et composé aromatique polycyclique, est réalisée selon le schéma de synthèse conventionnel à deux étapes mais en considérant comme milieu solvant, un milieu aqueux.

Au sens de l'invention un milieu aqueux est un milieu comprenant de l'eau en mélange ou non avec un solvant organique protonique de préférence choisi parmi les alcools comme par exemple le méthanol, l'éthanol et le propanol. Le milieu aqueux correspondant est avantageusement à au moins 50% d'eau en volume.

De préférence, le milieu aqueux consiste en de l'eau. L'eau considérée peut également être une eau recyclée.

Selon une variante particulière de l'invention, le procédé met en présence au moins l'hexaméthylènediamine et le di-anhydride de l'acide 3,4,9,10-pérylènetétracarboxylique dans un milieu solvant consistant en de l'eau.

La diamine aliphatique et le composé aromatique polycondensé selon l'invention peuvent être mis en présence dans le milieu aqueux et de préférence l'eau à raison de 1 équivalent de diamine aliphatique pour 1 équivalent de composé aromatique polycondensé.

La suspension qui en résulte est soit réalisée dans un autoclave soit préparée au préalable et transférée dans cet autoclave muni d'un mode d'agitation. L'autoclave est ensuite exposé à une température variant de 80 à 350 °C de préférence 100 à 300 °C et de préférence de l'ordre de 200°C pendant 1 à 72 heures, de préférence entre 5 et 30 heures et de préférence 24 heures.

En particulier, la polycondensation est réalisée en autoclave à une température d'environ 200°C.

L'autoclave est ensuite laissé refroidir lentement à température ambiante, et le (co)polyimide attendu est isolé par élimination du milieu solvant notamment par filtration ou centrifugation et de préférence par centrifugation dans l'acétone. En particulier, l'étape (iii) est réalisée par centrifugation de la formulation contenant ledit (co)polyimide obtenu en étape (ii).

Comme signifié préalablement, il est constaté une transformation totale composé aromatique polycondensé selon l'invention et en conséquence le (co)polyimide est isolée avec une pureté très satisfaisante.

### Utilisation comme matériau actif d'électrode

Comme évoqué précédemment, le (co)polyimide obtenu selon l'invention peut avantageusement être mis en œuvre comme matériau actif d'électrode organique.

Par « matériau ou composé actif d'électrode », on entend au sens de l'invention un matériau ou composé propice à l'insertion/désinsertion d'un cation d'une électrode d'un générateur électrochimique. Plus particulièrement, un matériau (composé) actif d'une électrode positive est capable de libérer des ions Cⁿ⁺ au moment de la charge et d'incorporer des ions Cⁿ⁺ au moment de la décharge du générateur électrochimique. Inversement, le matériau (composé) actif d'une électrode négative est capable d'incorporer des ions Cⁿ⁺ au moment de la charge et de libérer des ions Cⁿ⁺ au moment de la décharge du générateur électrochimique.

Ainsi, l'invention concerne également l'utilisation d'un matériau (co)polyimide tel qu'obtenu par le procédé de l'invention, à titre de matériau actif d'électrode. L'électrode, comprenant en tant que matière électro-chimiquement active, un matériau (co)polyimide(s) obtenu(s) selon l'invention selon l'invention, peut être une électrode positive ou une électrode négative.

L'invention a également trait à une électrode comprenant, à titre de matériau actif, au moins un matériau (co)polyimide tel qu'obtenu par le procédé de l'invention.

De préférence, le matériau (co)polyimide tel qu'obtenu par le procédé de l'invention mis en œuvre comme matériau actif d'électrode selon l'invention, représente avantageusement plus de 60% massique de la masse totale de l'électrode, en particulier de 70 % à 99 % massique, et plus particulièrement de 80 à 96 % massique de la masse totale de l'électrode.

Le (co)polyimide ou un mélange de (co)polyimide(s) obtenu(s) selon l'invention peut être mis en œuvre, de manière classique, conjointement avec un ou plusieurs liant(s), en particulier un ou plusieurs liants polymériques. De tels liants peuvent être choisis parmi des liants fluorés, en particulier parmi le polytétrafluoroéthylène, le polyfluorure de vinylidène, la carboxyméthylcellulose et ses dérivés, les polysaccharides, les polyacrylates, les latex notamment de type styrène-butadiène. De préférence, le liant mis en œuvre est la carboxyméthylcellulose.

Un (co)polyimide obtenu selon l'invention peut être mis en œuvre, de manière classique, conjointement avec un ou plusieurs additif(s) conducteur(s) électronique(s). Ces additifs conducteurs électroniques peuvent être choisis parmi des fibres de carbone, du noir de carbone, des nanotubes de carbone, du graphène, du graphite, et des particules métalliques, tels que des nanofils ou nanoparticules métalliques. Les particules métalliques peuvent être par exemple en aluminium, en cuivre, en nickel, ou des alliages de ceux-ci.

De préférence, les additifs conducteurs électroniques sont choisis parmi des additifs carbonés, tels que des nanofibres de carbone et du noir de carbone.

L'électrode à base du ou desdits (co)polyimide(s) obtenu(s) selon l'invention peut ainsi comprendre en outre un ou plusieurs additif(s) conducteur(s) électronique(s) et/ou un ou plusieurs liant(s), en particulier tels que décrits précédemment.

Selon un mode de réalisation particulier, une électrode organique selon l'invention peut ainsi comprendre, voire être formée :
- de 60 à 99 % massique, en particulier de 80 à 99 % massique, notamment de 90 à 95 % massique d'un ou plusieurs matériau(x) (co)polyimide obtenu(s) selon l'invention ;
- de 0,5 à 20 % massique, en particulier de 1 à 10 % massique et de préférence de 1 à 5 % massique, d'un ou plusieurs additif(s) conducteur(s) électronique(s), en particulier de type carboné ; et
- de 0,5 à 20 % massique, en particulier de 1 à 10 % massique et de préférence de 1 à 5 % massique, d'un ou plusieurs liants, en particulier de carboxyméthylcellulose ;
les pourcentages étant exprimés par rapport à la masse totale de l'électrode (hors collecteur de courant).

De manière classique, l'électrode est en contact avec un collecteur de courant.

Par exemple, du cuivre, de l'aluminium, du nickel, du feutre de carbone ou de l'acier inoxydable peuvent être utilisés comme collecteur de courant pour une électrode positive ; et du cuivre, ou de l'acier, traités en une feuille découpée, un métal en mousse ou une plaque de feuille laminée, par exemple, peuvent être utilisés comme collecteur de courant pour une électrode négative.

### Préparation de l'électrode organique

Pour la préparation de l'électrode, un ou plusieurs matériau(x) (co)polyimide obtenu(s) selon l'invention selon l'invention est avantageusement formulé avec un ou plusieurs solvants aqueux ou organiques.

Ainsi, une telle électrode organique peut être préparée *via* au moins les étapes suivantes consistant à :
(a) disposer d'une dispersion, couramment appelée « encre », comprenant, dans un milieu aqueux ou organique, au moins un matériau (co)polyimide obtenu selon l'invention, et éventuellement un ou plusieurs additif(s) conducteur(s) électronique(s) et/ou liant(s) ;
(b) procéder au dépôt de tout ou partie de la dispersion (a) à la surface d'un collecteur de courant, par exemple, de type feuillard en aluminium ; et
(c) évaporer ledit milieu aqueux ou organique pour former ladite électrode.

Une électrode comprenant, à titre de matériau actif, au moins un (co)polyimide peut également être préparée selon un procédé comprenant au moins les étapes consistant à :
(i) disposer d'une formulation contenant dans un milieu aqueux et de préférence dans de l'eau, au moins un composé aromatique polycondensé choisi parmi les acides tétracarboxyliques aromatiques polycondensés et les di-anhydrides d'acide aromatique polycondensé et au moins une diamine aliphatique secondaire,
(ii) exposer ladite formulation (i) à des conditions propices à la polycondensation desdits composé(s) aromatique(s) polycondensé(s) et diamine(s) pour former ledit (co)polyimide,
(iii) récupérer ledit (co)polyimide sous une forme purifiée du milieu solvant,
(iv) préparer une dispersion comprenant, dans un milieu aqueux ou organique, au moins tout ou partie dudit matériau (co)polyimide isolé en (iii), et éventuellement un ou plusieurs additif(s) conducteur(s) électronique(s) et/ou liant(s) ;
(v) procéder au dépôt de tout ou partie de ladite dispersion (iv) à la surface d'un collecteur de courant, par exemple, de type feuillard en aluminium ; et
(vi) évaporer ledit milieu aqueux ou organique pour former ladite électrode.

Les acides tétracarboxyliques aromatiques polycondensés, les di-anhydrides d'acide aromatique polycondensé et diamines aliphatiques secondaires sont tels que définis ci-dessus.

Ainsi, l'invention concerne encore une encre utile pour la préparation d'une électrode organique, comprenant, dans un milieu aqueux ou organique, en particulier aqueux, au moins un matériau (co)polyimide obtenu selon l'invention, et éventuellement un ou plusieurs additif(s) conducteur(s) électronique(s) et/ou liant(s).

Le dépôt de l'encre, peut être opéré, dans les procédés de préparation d'une électrode organique selon l'invention, par enduction, par une technique d'impression, par extrusion ou par colaminage. L'homme du métier est à même d'ajuster les conditions de mise en œuvre de ces différentes techniques.

L'évaporation du ou des solvants aqueux, dans les procédés de préparation d'une électrode organique selon l'invention, peut être opérée par séchage, par exemple à l'étuve, à une température comprise entre 20 et 150°C, en particulier entre 60 et 80 °C, pendant une durée comprise entre 1 et 15 heures.

### Système électrochimique

L'invention concerne également un système électrochimique comprenant au moins une électrode organique comprenant au moins un matériau (co)polyimide obtenu selon l'invention.

Le système électrochimique dans lequel est mis en œuvre l'électrode selon l'invention peut être notamment un accumulateur électrochimique rechargeable, en particulier un accumulateur ou une batterie au lithium.

De préférence, cet accumulateur électrochimique rechargeable comprend, outre l'électrode organique positive ou négative telle que définie précédemment comprenant un matériau composite selon l'invention, une électrode négative ou positive ne comprenant pas un matériau composite selon l'invention, et un électrolyte.

Avantageusement, une électrode selon l'invention peut être mise en œuvre dans une batterie en configuration cation-ion, notamment une batterie lithium-ion, sodium-ion, potassium-ion, magnésium-ion ; une batterie en configuration « dual-ion », dans laquelle à la fois des cations et des anions sont impliqués dans la réaction rédox .

Il peut s'agir d'une batterie lithium-ion, lithium-polymère, lithium-soufre, lithium-air ou supercondensateur, et de préférence une batterie lithium-ion.

Le reste de la batterie peut être formée selon des méthodes conventionnelles.

De manière générale, les batteries présentent une architecture avec deux électrodes (une électrode positive et une électrode négative), toutes les deux revêtues sur un collecteur de courant conducteur électrique, disposées de part et d'autre d'un séparateur organique ou inorganique. Les deux techniques de montage de cette architecture actuellement les plus utilisées sont le bobinage (enroulement des différents constituants dans une géométrie cylindrique ou prismatique) et le stack (empilement couche par couche des différents éléments). Bien entendu, d'autres techniques de montage pour former une batterie sont envisageables, telles que les techniques de l'impression.

L'invention va maintenant être décrite au moyen des figures et exemples suivants, donnés bien entendu à titre illustratif et non limitatif de l'invention.

### Exemple 1

### Préparation d'un matériau polyimide selon l'invention

La réaction de polycondensation est réalisée selon le schéma suivant :

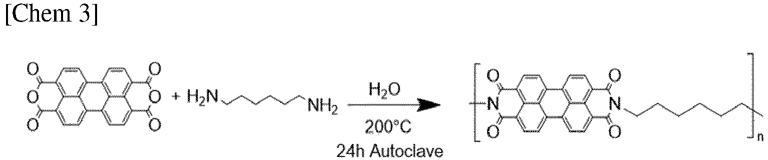

2g du dianhydride de l'acide 3,4,9,10-pérylènetétracarboxylique sont introduits avec 50ml d'eau déionisé et 575mg d'hexaméthylène diamine dans une chemise Parr en téflon de 125ml. La chemise est ensuite disposée dans l'unité d'étanchéité d'un réacteur 4748. Le réacteur est ensuite disposé dans une étuve à 200 degrés pendant 24h. Après refroidissement, le contenu de la chemise est centrifugé. Le matériau polyimide formé est récupéré et rincé à l'eau et à l'acétone par centrifugation. Il est ensuite séché à 75°C sous vide à 3mbar pendant 24h.

A titre comparatif, ce même schéma réactionnel est reproduit mais en considérant 100 ml de DMF à la place des 50 ml d'eau pour former un polyimide non conforme à l'invention.

Les deux produits ont été caractérisés par analyse IR à transformation de Fournier, IR-ATF.

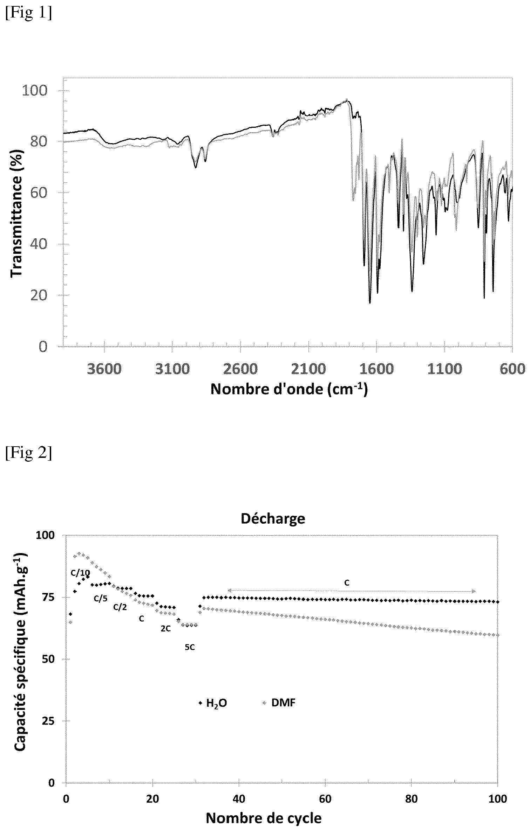

Le spectre d'analyse IR présentée en figure 1, révèle que seul le polyimide obtenu selon le procédé de l'invention ne contient plus de trace de l'anhydride. La bande IR à environ 1750 cm⁻¹, représentative de la fonction C=O anhydride, et constatée dans le polyimide non conforme à l'invention est absente du spectre IR du polyimide selon l'invention.

### Exemple 2

### Evaluation des performances électrochimiques

Afin de déterminer les performances électrochimiques du matériau polyimide obtenu en exemple 1, il a été procédé à un test électrochimique effectué en cyclage galvanostatique à un régime C.

Un composite est préparé en mélangeant au mortier le matériau actif (100mg) et l'additif conducteur (100mg). L'encre est formée par ajout au composite de PVDF (polyfluorure de vinylidène) en solution dans de la NMP (N-méthyl-2-pyrrolidone) (500mg solution à 10%Massique). Pour ajuster la consistance de l'encre, de la NMP peut être ajoutée (environ 2mL). L'encre une fois obtenue est enduite sur un feuillard en aluminium puis séchée à l'étuve (48h à 80°C). L'enduction est découpée en disque de 14 mn et calandrée à 10T au moyen d'une presse. L'électrode ainsi formée est séchée à 80 °C sous vide pendant 48h. Elle est ensuite assemblée en pile bouton en boîte à gant.

La Figure 2 rend compte de l'évolution de la capacité spécifique (en mAh/g) en fonction du nombre de cycles, à des régimes croissants (5 cycles à C/10, C/5, C/2,C , 2C, 5C, et 50 cycles à C) pour chacune des deux électrodes testées.

La tenue au cyclage est meilleure, pour la batterie mettant en œuvre une électrode à base du polyimide obtenu selon l'invention, est améliorée par rapport à celle constatée pour la batterie mettant en œuvre l'électrode à base du polyimide non conforme à l'invention.

## Revendications

1. Procédé de préparation d'un matériau (co)polyimide électro-actif, comprenant au moins les étapes consistant à :
(i) disposer d'une formulation contenant en milieu solvant au moins une diamine aliphatique secondaire et au moins un composé aromatique polycondensé choisi parmi les acides tétracarboxyliques aromatiques polycondensés et les di-anhydrides d'acide aromatique polycondensé,
(ii) exposer ladite formulation (i) à des conditions propices à la polycondensation desdits composé(s) aromatique(s) polycondensé(s) et diamine(s) pour former ledit (co)polyimide et
(iii) éliminer ledit milieu solvant,
**caractérisé en ce que** ledit milieu solvant consiste en un milieu solvant aqueux et en particulier en de l'eau et **en ce que** la diamine aliphatique secondaire est de formule (I)
NH₂-(R)ₙ-NH₂ (I)
avec
- n étant égal à 1 et
- R étant un radical divalent hydrocarboné, linéaire ou ramifié, en C1 à C20, saturé ou insaturé dont la chaîne hydrocarbonée divalente peut être interrompue par un ou plusieurs hétéroatomes, en particulier par un ou plusieurs atomes d'oxygène et/ou un ou plusieurs noyaux aromatiques en C5 à C15.

2. Procédé selon la revendication 1, dans lequel le di-anhydride d'acide aromatique polycondensé est choisi parmi les di-anhydrides d'acide tétracarboxylique dont la structure aromatique polycyclique dérive de l'anthracène, du benzoanthracène, du benzofluoranthène, du 1,12-benzopérylène, du benzopyrène, du chrysène, du dibenzoacridine, du dibenzoanthracène, du dibenzofurane, du dibenzopyrène, du pérylène ou du phénanthrène.

3. Procédé selon la revendication 1 ou 2, dans lequel l'acide tétracarboxylique aromatique polycondensé est choisi parmi les acides tétracarboxyliques, dont la structure aromatique polycondensée dérive de l'anthracène, du benzoanthracène, du benzofluoranthène, du 1,12-benzopérylène, du benzopyrène, du chrysène, du dibenzoacridine, du dibenzoanthracène, du dibenzofurane, du dibenzopyrène, du pérylène et du phénanthrène, de préférence non hydroxylés et de préférence est choisi parmi l'acide 1,2,5,6- naphthalènetétracarboxylique, l'acide 2,3,6,7-naphthalènetétracarboxylique, l'acide 3,4,9,10-pérylènetétracarboxylique et leurs mélanges.

4. Procédé selon l'une quelconque des revendications 1 à 3, dans lequel ledit composé aromatique polycondensé est le di-anhydride de l'acide 3,4,9,10-pérylènetétracarboxylique.

5. Procédé selon l'une quelconque des revendications précédentes, dans lequel la diamine aliphatique secondaire est choisie parmi les diamines aliphatiques acycliques comme par exemple les 1,2-diaminoéthane, 1,3-diaminopropane, 1,4-diaminobutane, 1,5-diaminopentane, l'hexaméthylène diamine, 2,2,4- et 2,4,4-triméthyl-hexaméthylène diamine, 1,7-diaminoheptane, 1,8-diaminooctane, 2-méthyl-1,8-diaminooctane, 2,2,7,7-tétraméthyl-octaméthylène diamine, 1,9-diaminonane, 5-méthyl-1,9-diaminononane, 1,10-diaminodécane, 1,1,1-diaminoundécane, 1,12-diaminododécane, 1,13-diaminothdécane, 1,14-diaminotétradécane et 2,2'-(éthylènedioxy)bis(éthyleneamine), les diamines aliphatiques cycliques comme par exemple les 1,2-bis(aminomethyl)cyclohexane, 1,3-bis(aminomethyl)cyclohexane, 1,4-bis(aminomethyl)cyclohexane, 1,2-cyclohexanediamine, 1,3-cyclohexanediamine, 1,4-cyclohexanediamine, 4,4'-diaminodicyclohexylmethane, 4,4'-methylenebis(2-methylcyclohexylamine), isophoronediamine, norbornanediamine, bis(aminomethyl)tricyclo[5.2.1.0(2,6)]decane, 3,3'-dimethyl-4,4'-diaminodicyclohexylmethane, et 4,4'-diaminodicyclohexylpropane et leurs mélanges et de préférence est l'hexaméthylènediamine.

6. Procédé selon l'une quelconque des revendications précédentes mettant en présence au moins l'hexaméthylènediamine et le di-anhydride de l'acide 3,4,9,10-pérylènetétracarboxylique dans un milieu solvant consistant en de l'eau.

7. Procédé selon l'une quelconque des revendications précédentes dans lequel ladite polycondensation est réalisée en autoclave à une température de 200°C.

8. Procédé selon l'une quelconque des revendications précédentes dans lequel l'étape (iii) est réalisée par centrifugation de la formulation contenant ledit (co)polyimide obtenu en étape (ii).

9. Matériau (co)polyimide obtenu par le procédé défini selon l'une quelconque des revendications 1 à 8.

10. Utilisation d'un matériau (co)polyimide tel que défini en revendication 9, à titre de matériau actif d'électrode.

11. Electrode comprenant, à titre de matériau actif, au moins un matériau (co)polyimide tel que défini en revendication 9.

12. Electrode selon la revendication précédente, comprenant en outre un ou plusieurs additif(s) conducteur(s) électronique(s) et/ou un ou plusieurs liant(s).

13. Electrode selon la revendication 11 ou 12, dans laquelle ledit matériau (co)polyimide représente plus de 60% massique de la masse totale de l'électrode, en particulier de 70 % à 99 % massique, et plus particulièrement de 80 à 96 % massique de la masse totale de l'électrode.

14. Procédé de préparation d'une électrode telle que définie selon l'une quelconque des revendications 11 à 13 comprenant au moins les étapes suivantes consistant à :
(a) disposer d'une dispersion comprenant, dans un milieu aqueux ou organique, au moins un matériau (co)polyimide obtenu selon l'une quelconque des revendications 1 à 8, et éventuellement un ou plusieurs additif(s) conducteur(s) électronique(s) et/ou liant(s) ;
(b) procéder au dépôt de tout ou partie de ladite dispersion (a) à la surface d'un collecteur de courant, par exemple, de type feuillard en aluminium ; et
(c) évaporer ledit milieu aqueux ou organique pour former ladite électrode.

15. Procédé de préparation d'une électrode comprenant, à titre de matériau actif, au moins un (co)polyimide comprenant au moins les étapes consistant à :
(i) disposer d'une formulation contenant dans un milieu aqueux et de préférence dans de l'eau, au moins un composé aromatique polycondensé choisi parmi les acides tétracarboxyliques aromatiques polycondensés et les di-anhydrides d'acide aromatique polycondensé et au moins une diamine aliphatique secondaire de formule (I) telle que définie en revendication 1, lesdits acides tétracarboxyliques aromatiques polycondensés, di-anhydrides d'acide aromatique polycondensé et diamines aliphatiques secondaires étant en particulier tels que définis selon l'une quelconque des revendications 2 à 5,
(ii) exposer ladite formulation (i) à des conditions propices à la polycondensation desdits composé(s) aromatique(s) polycondensé(s) et diamine(s) pour former ledit (co)polyimide,
(iii) récupérer ledit (co)polyimide sous une forme purifiée du milieu solvant,
(iv) préparer une dispersion comprenant, dans un milieu aqueux ou organique, au moins tout ou partie dudit matériau (co)polyimide isolé en (iii), et éventuellement un ou plusieurs additif(s) conducteur(s) électronique(s) et/ou liant(s),
(v) procéder au dépôt de tout ou partie de ladite dispersion (iv) à la surface d'un collecteur de courant, par exemple, de type feuillard en aluminium et
(vi) évaporer ledit milieu aqueux ou organique pour former ladite électrode.

16. Système électrochimique, en particulier un accumulateur électrochimique rechargeable, plus particulièrement un accumulateur ou une batterie au lithium, comprenant au moins une électrode telle que définie selon l'une quelconque des revendications 11 à 13.
